# EUROPEAN PATENT SPECIFICATION

(11) **EP 2 651 230 B1**
(45) Date of publication and mention of the grant of the patent: **10.06.2015**
(21) Application number: 11796643.2
(22) Date of filing: 28.11.2011
(51) Int. Cl.: A23D 7/00, A23D 9/00

(54) **WRAPPER MARGARINE**
MARGARINEPAPIER
MARGARINE D'EMBALLAGE

(30) Priority: 17.12.2010 EP 10195567
(43) Date of publication of application: 23.10.2013
(73) Proprietor: Unilever N.V., 3013 AL Rotterdam (NL); Unilever PLC, London, Greater London EC4Y 0DY (GB)
(72) Inventor: VAN KEMPEN, Gijsbert, Michiel, Peter, NL-3133 AT Vlaardingen (NL); LAGERWAARD, Cornelis, Abraham, NL-3133 AT Vlaardingen (NL)
(74) Representative: Brooijmans, Rob Josephina Wilhelmus
(86) International application number: PCT/EP2011/071150
(87) International publication number: WO 2012/079964

(56) References cited:
- WO-A1-96/19115
- WO-A1-2005/071053
- WO-A1-2007/039020
- WO-A1-2007/096211
- WO-A1-2007/096243

## Description

### Field of the invention

The present invention relates to wrapper margarine with a reduced amount of saturated fatty acids, fat blend suitable for making such wrapper margarines and a process for the preparation of such wrapper margarines.

### Background of the invention

Fat continuous food products are well known in the art and include for example shortenings comprising a fat phase, and water in oil spreads like margarine comprising a fat phase and an aqueous phase.

The fat phase of margarine and similar edible fat continuous spreads is often a mixture of liquid oil (i.e. fat that is liquid at ambient temperature) and fat which is solid at ambient temperatures. The solid fat, also called structuring fat or hardstock fat, serves to structure the fat phase (being the case in for example a shortening as well as in a water in oil emulsion) by forming a fat crystal network. It also helps to stabilize the emulsion. The droplets of the aqueous phase, if present, are fixed within the spaces of the lattice of solid fat crystals. This prevents coalescence of the droplets and separation of the heavier aqueous phase from the fat phase.

For a margarine or spread, ideally the structuring fat has such properties that it melts or dissolves at mouth temperature. Otherwise the product may have a heavy and/or waxy mouthfeel.

Margarine is generally defined as a composition containing at least 80 wt% fat and about 20 wt% aqueous phase. In contrast, emulsions containing less than 80 wt% fat are generally called spreads. Nowadays the terms margarine and spread are often used interchangeably although in some countries the commercial use of the term margarine is subject to certain regulatory requirements. The main difference between margarine and spread is the amount of fat. Therefore, for the purpose of the present invention the terms margarine and spread will be used interchangeably.

Margarine may be used for different applications including spreading, (shallow) frying and baking. In the market place margarine is generally sold as one of three principal types, namely hard or stick margarine (generally referred to as wrapper margarine), soft or tub margarine and liquid or pourable margarine. Wrapper margarine would typically have a Stevens value of more than 275 gram at 5 degrees Celsius and more than 200 gram at 10 degrees Celsius. Tub margarine would typically have a Stevens value of up to 250 gram at 5 degrees Celsius and up to 200 gram at 10 degrees Celsius. The Stevens value is the value as measured according to the method described in the experimental section. Liquid margarine would typically have a Bostwick value of at least 4 at 15 °C, preferably a Bostwick value of at least 7. The Bostwick value is the value as measured according to the method described in the experimental section. ,

Wrapper margarine needs to have a certain firmness (also called hardness) to keep its shape preferably also at higher temperatures. It should also be able to withstand a certain amount of pressure to enable stacking of the wrapper margarine like e.g. at the manufacturing site, during transport, storage or presentation in a shop. This is usually measured with what is called 'a stacking test'.

To achieve the required amount of firmness in a wrapper margarine (expressed as Stevens value) the choice of fats that can practically be used as structuring fat is rather limited. If the melting point of the structuring agent is too high the melting properties in the mouth are unsatisfactory. If on the other hand, the melting point is too low, the emulsion stability will be negatively affected.

A wrapper margarine thus needs to be rather firm. This usually requires a relatively high amount of saturated fatty acid (SAFA) in the structuring fat. However, some consumers prefer wrapper margarines that are low in SAFA and preferably have a good nutritional profile by providing for example essential fatty acids (EFA).

Essential fatty acids are fatty acids that humans and other animals must ingest for good health because the body requires them but cannot make them from other food components. The term refers to fatty acids required for biological processes, and not those that only act as fuel. The most important two essential fatty acids are alpha-linolenic acid (ALA), an omega-3 fatty acid; and linoleic acid (LA) an omega-6 fatty acid.

Trans unsaturated fatty acids are known to have a good structuring capacity and sometimes are used in addition or instead of SAFA to impart the required structure in a wrapper margarine. However, some experts have called for reductions in these fatty acids to improve cardiovascular health.

Triacylglycerols (TAG) are the major constituents of natural fats and oils and are esters of glycerol and fatty acids. The chemical structure of the fatty acid and the distribution of the fatty acids over the glycerol backbone determine (at least partly) the physical properties of a fat: The physical properties of fats, like for example the solid fat content (SFC) expressed as N-value, can be modified by altering the chemical structure of the fat. Well known techniques that are widely used include hydrogenation and interesterification.

Hydrogenation alters the degree of unsaturation of the fatty acids and as such alters the fatty acid composition. This allows e.g. plastic fats to be made from liquid oils. A draw back of hydrogenation, especially of partial hydrogenation, is the formation of by products like e.g. trans unsaturated fatty acids. Furthermore additional process steps are required and some consumers perceive a chemical process such as hydrogenation as undesirable.

Interesterification retains the fatty acid composition but alters the distribution of the fatty acids over the glycerol backbones. Interesterification can be done chemically or with the aid of enzymes. Usually a mixture of two different fats, that by themselves are not or less suitable as a structuring fat, is subjected to interesterification. The resulting interesterified fat will have improved structuring properties compared to the starting materials.

Generally edible fat continuous food products like for example margarines and similar edible fat continuous spreads are prepared according to known processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

For the preparation of a soft or tub margarine the votator process typically employs a series of one or more scraped surface heat exchangers (A-unit) and one or more pin stirrers, also known as crystallizers (C-unit). The resulting fat continuous emulsion will have some firmness but typically will still be liquid when it is packed in e.g. a tub. The product will get firmer after packing due to a process called post-hardening (i.e. the further crystallization and building of the crystal network).

For soft or tub margarines the liquid consistency right after production is usually not a problem as the product is usually packed in containers that hold the product in place and confer shape.

Wrapper margarines are usually packed in a wrapper, like for example paper, which usually cannot support a liquid product as it cannot confer shape to the packed product. An exception is for example a foil wrapper that can hold and confer shape but is not a preferred option because of cost and environmental reasons. Therefore wrapper margarine preferably should have enough firmness before packing to, at least without extensive additional measures, hold its shape long enough until post hardening is complete. This is usually facilitated by including one or more resting tubes (B-units) in the votator configuration. The B-unit usually is a tube. The emulsion flows through the B-unit allowing the crystal network to gain strength thereby giving the emulsion more firmness. Sometimes the emulsion that is closest to the wall solidifies and only the emulsion that is further away from the wall flows through the B-unit. This is called 'channeling' and preferably should be avoided as it diminishes the effectiveness of the B-unit or in the extreme results in products of lesser quality.

Although the emulsion should have enough firmness at time of packing it should be pliable enough to be formed into the required shape, usually a brick, by for example extrusion. This means that some degree of post hardening is always required.

Furthermore, the wrapper needs to have some degree of plasticity and homogeneity to be regarded as a high quality wrapper. This is often achieved by providing some mild working to the emulsion as it is crystallizing and firming up in the B-unit. A lack of adequate amount of a mild form of working (as opposed to the significant amount of working obtained by using a C-unit) will result in a wrapper that is brittle, inhomogeneous and will display cracks when broken open. Sieve plates in a single-leg B-unit or switching the emulsion between two legs of a twin B-unit typically provides this mild form of working to a wrapper emulsion.

The call for lower SAFA and/or higher EFA containing fat blends may not always be compatible with the requirements of wrapper margarine production and products, like for example channeling, firmness of the emulsion during processing, before packing and after packing.

US 4,341,813 concerns stick and pat margarines wherein the blend of vegetable oil and hard stock is high in polyunsaturates and has a low-trans-isomer fatty acid content. The fat blend comprises hydrogenated and interesterified fat.

EP 0 041 299 relates to natural fat blends which can be used for producing margarines which are packaged in wrappers. The fat blend is substantially free of hydrogenated and interesterified fats. The fat blends contain more than 35 wt% SAFA on total fat.

GB 2 292 949 relates to stick-type margarines and other spreads which contain no detectable levels of trans fatty acids or tropical oils and comprise specific blends of co-interesterified liquid unsaturated vegetable oils hardstocks.

WO2007/096211 A1 relates to non-dairy products wherein the fat is 100% vegetable, which does not comprise gelatin, but and which is stable and has a pleasant mouth feel. This is achieved by a water-continuous product which contains less than 1 wt% gelatin, comprising 10 to 50 wt% of fat, having a pH of between 3 and 5.4 wherein at least 90 wt% of the fat is a vegetable fat and/or marine fat wherein a combined amount of PPO + POP of at least 0.5 wt% is present and wherein a ratio of POP/PPO is less than 2.5.

WO2007/039020 A1 relates to margarine fats that are as food as prior art products (i.e. referring to prior art products known before the priority date of WO2007/039020) in terms of nutritional properties and sensoric properties, but that have been produced without the use of hydrogenation. Furthermore it relates to hardstock fat which is suitable for low fat high PUFA spreads, and the margarine fat with less lauric fatty acids. This is achieved by a hardstock fat having an amount of saturated fatty acids of at least 80 wt%, wherein the amount of H3_{mixed} triglycerides is between 45 and 60 wt%, and wherein the amount of H2X_{mixed} triglycerides is at least 10 wt%.

WO2005/071053 A1 relates to an enzymatic rearrangement process wherein an appreciable amount of rearrangement on the middle position occurs. Furthermore it relates to a process with a short reaction time and an enzymatic rearrangement process without the deliberate use of diacylglycerides. This is achieved by use of a catalyst with an activity exceeding 250 IUN (22 g/ (g*h)) as measured at the onset of the process.

WO2007/096243 A1 relates to non-dairy products wherein the fat is 100% vegetable, which does not comprise gelatin, but and which is stable and has a pleasant mouth feel. This is achieved by a water-continuous non-dairy product comprising 10 to 50 wt% of fat, which is essentially gelatin free, having a pH of 3 and 5.4, wherein at least 90 wt% of the fat is a vegetable fat and/or a marine fat and having an amount of U3 of at least 22 wt%, a combined amount of U3 and H2U of at least 30 wt% and an amount of TAG cluster MX of less than 70 wt%.

WO96/19115 A1 relates to margarine fats that are as good as the prior art products (i.e. referring to prior art products known before the priority date of WO96/19115) in respect of nutritional properties as well as the sensoric properties of the resulting spreads, but that have been produced without the use of hydrogenation. This is achieved by a margarine fatblend essentially comprising 86-95% liquid oil and 5-14% of a hardstock, this hardstock being a stearin fraction of an interesterified mixture of 25-65% and preferably 35-55%, unhardened lauric fat stearin and 75-35%, and preferably 65-45%, unhardened C₁₆₊ fat stearin.

There is thus a need for fat blends that are suitable for wrapper margarine that have a good nutritional profile (e.g. low in SAFA or high in EFA).

### Summary of the invention

We have found that fat blends comprising 15 to 35 wt% SAFA are suitable for wrapper margarine if the TAG composition of the fat blend is such that specific TAG ratios are present.

Accordingly in a first aspect the invention relates to an edible fat blend comprising liquid oil and structuring fat, the fat blend comprising a mixture of triglycerides wherein the weight ratio of the
- H3/H2M triglycerides is 1.35 to 4.3,
- H2U/H2M triglycerides is 1.8 to 6,
- HT/LT triglycerides is 0.17 to 0.25,
- H3/LT triglycerides is 0.11 to 0.20,
and wherein the fat blend comprises 15 to 35 wt% saturated fatty acids (SAFA).

Another aspect of the invention concerns an edible fat continuous wrapper margarine comprising 5 to 60 wt% of a dispersed aqueous phase and 40 to 95 wt% of a fat phase, wherein the fat phase is a fat blend as described above and wherein the wrapper margarine has a Stevens value at 5 degrees Celsius of 275 to 600 gram.

A further aspect of the invention concerns a process for the preparation of a wrapper margarine as described above comprising the steps of providing a fat blend as described above, providing a mixture comprising said fat blend and an aqueous phase, and processing the mixture in a votator comprising at least one B-unit to provide a fat continuous emulsion.

### Detailed description of the invention

Wt% is calculated on total weight of product unless otherwise specified. For the purpose of the invention ambient temperature is defined as a temperature of about 20 degrees Celsius. The terms 'oil' and 'fat' are used interchangeably unless specified otherwise and concern edible oils and fats. Where applicable the prefix 'liquid' or 'solid' is added to indicate if the fat or oil is liquid or solid at ambient temperature as understood by the person skilled in the art. The term 'structuring fat' refers to a fat that is solid at ambient temperature.

### Triglycerides

Edible fats contain a large number of different triacylglycerols (TAGs), also called triglyceride or triacylglyceride, with varying physical properties. The TAGs in edible fats are composed of fatty acids with an even number of carbon atoms in the chains, varying between 4 and 24 in number. Common fatty acids of vegetable origin are C10; C12, C14, C16, C18, C20 and C22, and most common TAGs are composed of these fatty acids. Moreover, each fatty acid can contain up to three double bonds at certain positions in the chain. Especially fish oil contains a high number of unsaturated fatty acids with more than one unsaturated bond in the chain.

TAGs can be classified in groups as follows.
H3, H2M and H2U are defined as Hard TAGs (HT).
H2Sh, HM2, M3, M2U, HMU, HU2 and MU2 are defined as Soft TAGs (ST).
U3 are defined as Liquid TAGs (LT).

H represents the saturated longer chain fatty acids (C16 and higher), M the saturated middle melting fatty acid chains (C12 to C14) and Sh the saturated short chain fatty acids (C4 to C10). U stands for an unsaturated fatty acid chain. The definitions X2Y, XY2 and XYZ include all configurations (i.e. all symmetries of the FA distribution over the glycerol backbone). For example, X2Y includes XXY and XYX.

### Fat blend

The edible fat blend according to the present invention comprises a mixture of TAGs wherein the weight ratio of the
- H3/H2M triglycerides is 1.35 to 4.3;
- H2U/H2M triglycerides is 1.8 to 6;
- HT/LT triglycerides is 0.17 to 0.25;
- H3/LT triglycerides is 0.11 to 0.20.

We have surprisingly found that fat blends with such a TAG profile are suitable for wrapper margarine even if the fat blend has a SAFA level of 15 to 35 wt% (calculated on total fat blend). Wrapper margarine made with these fat blends has less to no tendency to show channeling during production comprising the use of a B-unit and/or has a suitable firmness right after production at the time of packing and/or has a suitable amount of post-hardening upon storage after production and packing.

The fat blend is especially suitable for wrapper margarine with a low level of SAFA. Therefore, the fat blend preferably comprises 20 to 35 wt%, preferably 25 to 35 wt% and more preferably 25 to 30 wt% SAFA.

Despite the fact that the fat blend has a low amount of SAFA it is still capable of comprising a fair amount of essential fatty acids (EFA). EFAs are poly unsaturated fatty acids (PUFA) and by their very nature contribute little, if at all, to the firmness of a fat blend. The inclusion of EFAs in a fat blend enhances the nutritional profile of the fat blend. Therefore, the fat blend according to the invention preferably comprises 10 to 40 wt%, more preferably 15 to 35 wt% and even more preferably 20 to 30 wt% essential fatty acids (EFA).

Preferred EFAs are ALA and LA and the fat blend preferably comprises at least 1 wt% ALA and at least 10 wt% LA (calculated on total fat blend). For the sake of clarity, the amount of ALA and LA are part of the total amount of EFA. More preferably the amount of ALA is at least 1.5 wt% and the amount of LA is at least 15 wt%.

The fat blend comprises liquid oil (i.e. fat that is liquid at ambient temperature) and structuring fat (i.e. fat that is solid at ambient temperature). Preferably the fat blend comprises 50 to 80 wt% and more preferably 60 to 70 wt% liquid oil.

The oil or fat may be a natural (i.e. not modified) or a modified fat or oil to enhance its physical properties. Suitable methods include interesterification and hydrogenation. Examples of hydrogenated fats employed in margarines are fully hydrogenated palm oil with a slip melting point of 58 degrees Celsius and fully hydrogenated rapeseed oil with a slip melting point of 70 degrees Celsius.

Trans unsaturated fatty acids are known to have a good structuring capacity but are not preferred as they are associated with cardiovascular disease. Therefore, preferably the fat blend comprises less than 5 wt%, more preferably less than 3 wt% and even more preferably less than 1 wt% trans unsaturated fatty acid. Trans unsaturated fatty acids are naturally present mainly in fats of animal origin like for example butter fat and butter oil. Partial hydrogenation of liquid vegetable oils may also lead to the presence of trans unsaturated fatty acids. Therefore, the fat blend preferably does not contain partially hydrogenated fats.

The liquid oil may be a single oil or a mixture of two or more oils. Likewise the structuring fat may be a single fat or a mixture of two or more fats. The liquid oil and structuring fat may be of vegetable, mammalian (e.g. dairy fat or butter oil) or marine (e.g. algae oil or fish oil) origin.

Preferably at least 50 wt% of the liquid oil (based on total amount of liquid oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

Preferably the liquid oil is selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, palm kernel oil, coconut oil and combinations thereof. More preferably the liquid oil is selected from soybean oil, sunflower oil, rape seed oil, linseed oil, palm olein and combinations thereof.

Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of fat of vegetable origin.

Preferably the structuring fat is selected from palm fat, allan blackia, pentadesma, shea butter, coconut oil, soybean oil, rapeseed oil, dairy fat and combinations thereof. More preferably the structuring fat is selected from the group consisting of palm oil, palm kernel oil, palm oil fraction, palm kernel fraction, coconut oil, dairy fat fraction and combinations thereof. Even more preferably the structuring fat is selected from the group consisting of palm oil, palm kernel oil, palm oil fraction, palm kernel fraction, coconut oil and combinations thereof.

Preferably at least 50 wt% of the total fat blend (based on total amount of fat blend) is of vegetable origin, more preferably at least 60 wt%, even more preferably at least 70 wt%, still more preferably at least 80 wt%, even still more preferably at least 90 wt% and even still more further preferably at least 95 wt%. Most preferably the fat blend essentially consists of fat of vegetable origin.

Examples of suitable fat blends include fat blends comprising vegetable oil, up to 20 wt% fish oil and not more than 10 wt% dairy fat; and fat blends comprising vegetable oil, up to 20 wt% fish oil and are free of fat of mammalian origin.

Even though complete hydrogenation does not suffer from the drawback of (excessive) trans unsaturated fatty acid formation, some consumers perceive this as undesirable. Therefore, the fat blend according to the present invention preferably is free of hydrogenated fat and the fat blend comprises a mixture of triglycerides wherein the weight ratio of the
- H3/H2M triglycerides is 1.35 to 4.3,
- H2U/H2M triglycerides is 1.8 to 6,
- HT/LT triglycerides is 0.17 to 0.25,
- H3/LT triglycerides is 0.11 to 0.20.

Preferably the fat blend furthermore comprises a combined amount of H3 + H2M + H2U of 10 to 25 wt% and more preferably 15 to 20 wt%. For the sake of clarity this is the case for the fat blend (optionally) comprising (partially) hydrogenated fat as well as for the fat blend that is free of hydrogenated fat.

### Wrapper margarine

As stated above the edible fat according to the invention is especially suitable for the preparation of wrapper margarine. Therefore the invention also relates to an edible fat continuous wrapper margarine comprising 5 to 60 wt% of a dispersed aqueous phase and 40 to 95 wt% of a fat phase, wherein the fat phase is a fat blend according to the present invention, and wherein the wrapper margarine has a Stevens value at 5 degrees Celsius of 275 to 600 gram.

Wrapper margarines are very versatile in their use and are employed in spreading (e.g. on bread), baking (e.g. cakes) and cooking (e.g. shallow frying). Depending on the main purpose of the wrapper margarine the amount of fat phase may vary. For example, for frying purposes a higher fat wrapper margarine may be preferred. Therefore, the wrapper margarine preferably comprises 50 to 90 wt%, more preferably 60 to 90 wt% and even more preferably 65 to 85 wt% of the fat phase.

The aqueous phase may have any composition which is common for wrapper margarine manufacture and which may comprise the usual ingredients like for example water, one or more emulsifiers, gelling and/or thickening agents, salt, colouring agent, flavour, preservative, vitamins and dairy protein.

The wrapper margarine according to the invention comprises a dispersed aqueous phase (i.e. water droplets). Preferably the wrapper margarine comprises 10 to 50 wt%, more preferably 10 to 40 wt% and even more preferably 15 to 35 wt% of the dispersed aqueous phase.

Smaller water droplet sizes are preferred as this leads to increased microbiological stability and/or aid the firmness of the water in oil emulsion. Therefore, the water droplets in the wrapper margarine preferably have a water droplet size of less than 15 micrometer, more preferably less than 10 micrometer and even more preferably less than 5 micrometer.

The wrapper margarine has a firmness right after production that allows the margarine to be packed in wrappers without the need of form stable packaging. That is, the margarine is firm enough to keep its shape, but soft enough to be conveniently packed (as for example a margarine that is too hard will require more expensive/complex equipment). Typically this would be a Stevens value of at least 150 gram for the temperature of the emulsion at packing, like for example about 15 degrees Celsius.

After packing and post hardening the margarine preferably has a Stevens value at 5 degrees Celsius of 300 to 500 gram and more preferably of 350 to 400 gram. The margarine preferably also has a Stevens value at 10 degrees Celsius of 200 to 350 gram and more preferably of 250 to 300 gram. The Stevens value is measured according to the protocol as described in the experimental section.

### Preparation

The wrapper margarine of the present invention can be suitably prepared according to any of the conventional methods employed in the art of margarine making. The fat blend employed in the wrapper margarine of the invention is especially suitable for use in the so called well known votator process as used for the preparation of wrapper margarine.

Therefore, the invention also relates to a process for the preparation of a wrapper margarine according to the invention comprising the steps of providing a fat blend according to the invention, providing a mixture comprising said fat blend and an aqueous phase, and processing the mixture in a votator comprising at least one B-unit to provide a fat continuous emulsion.

Wrapper margarine made with these fat blends has less to no tendency to show channeling during production comprising the use of a B-unit.

The votator will usually comprise of one or more A-units, one or more B-units and optionally one or more C-units. Preferably the votator used in the process according to the invention is equipped with at least one A-unit and at least one B-unit. Preferably the votator comprises a B-unit as the last processing unit before packing of the fat continuous emulsion.

The process will include the preparation of a mixture comprising a fat phase and an aqueous phase wherein the mixture is heated to a temperature at which part, preferably all, of the fat phase is in a molten state. This mixture is then processed in a votator line.

The invention is now illustrated by the following non limiting examples.

### Examples

### Stevens value

Stevens values give an indication about the hardness (also called firmness) of a product at a given temperature. The Stevens value at a given temperature is determined according to the following protocol.

Freshly prepared products are stored at 5 degrees Celsius. To determine the hardness at a given temperature the sample is stored at the given temperature for at least 24 hours after stabilization at 5 degrees Celsius for at least one week. The hardness of the product is then measured with a Stevens penetrometer (Brookfield LFRA Texture Analyser (LFRA 1500), ex Brookfield Engineering Labs, UK) equipped with a stainless steel probe with a diameter of 4.4 mm and operated in "normal" mode. The probe is pushed into the product at a speed of 2 mm/s, a trigger force of 5 gram from a distance of 10 mm. The force required is read from the digital display and is expressed in gram.

### Solid Fat Content measured on fat (SFC on fat)

The solid fat content (SFC) in this description and claims is expressed as N-value, as defined in Fette, Seifen Anstrichmittel 80 180-186 (1978). The stabilization profile applied is heating to a temperature of 80 degrees Celsius, keeping the oil for at least 10 minutes at 60 degrees Celsius or higher, keeping the oil for 1 hour at 0 degrees Celsius and then 30 minutes at the measuring temperature.

### Water droplet size distribution of spreads (D3,3 measurement)

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the lognormal droplet size distribution - the parameters of the water droplet size distribution D3,3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

The droplet size of the spread is measured, according to the above described procedure, of a spread stabilized at 5 degrees Celsius right after production for one week. This gives the D3,3 after stabilization at 5 degrees Celsius.

### Standard Bostwick protocol

The Bostwick equipment consists of a 125 ml reservoir provided with an outlet near the bottom of a horizontally placed rectangular tub and closed with a vertical barrier. The tub's bottom is provided with a 25 cm measuring scale, extending from the outlet of the reservoir. When equipment and sample both have a temperature of 15 degrees Celsius, the reservoir is filled with 125 ml of the sample after it has been shaken by hand ten times up and down. When the closure of the reservoir is removed the sample flows from the reservoir and spreads over the tub bottom. The path length of the flow is measured after 15 seconds. The value, expressed as cm per seconds is the Bostwick value, which is used as yard stick for pourability. The maximum value that can be determined with this measurement is 23 cm.

### Stacking test

A stacking test evaluates a stack of freshly produced wrappers (within 2 hours after production) that are placed on top of each other in a supporting rack that provides stability to the stack, but that does not offload any of the gravitational forces exhibited on the wrapper stack.
The wrapper stack is stored for 24 hours in a temperature controlled environment, after which the amount of oil exudation is evaluated for each individual wrapper starting from the top one.
The stacking "in between" score is the number of wrappers for which no free oil is found in between two wrappers stacked on top of each other. The stacking "folds" score is the number of wrappers for which no free oil is found in the folded wrapper paper at the short ends of the wrapper.
In the standardized stacking test, 20 wrappers are stacked on top of each other, and are stored at 20 degrees Celsius. A good "in between" score is 6 or more and a good "folds" score is 10 or more for 500gr wrappers.

### Wrapper margarine

Wrapper margarine according to the present invention (Examples 1 to 3) and wrapper margarine not according to the present invention (Examples 4. A to E) were prepared with the composition as in Tables 1 and 2, following the protocol as described below.

**Table 1, Wrapper margarine composition of Examples 1 to 4 and A to E**

| **Ingredient** | **(wt%)** |
|---|---|
| Fat blend | See Table 2 |
| Saturated monoglyceride | 0.1 |
| Lecithin | 0.3 |
| Whey powder | 0.5 |
| Water | Balance |
| pH (using citric acid) | 4.7 |

**Table 2, amount of fat blend and fat blend composition**

| **Example** | **Fat blend wt%*** | **Fat blend composition wt% on fat blend**** |
|---|---|---|
| 1 | 80 | 63% rapeseed oil /12% palm oil/10% of an interesterified mixture of dry fractionated palm stearin with a slip melting point of 52 degrees Celsius/15% of an interesterified mixture of 65% multifractionated palm stearin IV14 and 35% palm kernel |
| 2 | 80 | 2.88% linseed oil /9.12% sunflower oil/49% rapeseed oil /12% of an interesterified mixture of 92% palm oil and 8% palm kernel oil/16% of an interesterified mixture of 65% dry fractionated palm stearin with a slip melting point of 52 degrees Celsius and 35% palm kernel oil /11% of an interesterified mixture of dry fractionated palm stearin with a slip melting point of 52 degrees Celsius |
| 3 | 70 | 59% rapeseed oil / 3% sunflower oil / 3% soy bean oil / 11 % of an interesterified mixture of 65% dry fractionated palm stearin with a slip melting point of 52 degrees Celsius and 35% palm kernel oil / 24% of an interesterified mixture of dry fractionated palm stearin with a slip melting point of 52 degrees Celsius |
| 4 | 50 | 45% rapeseed oil /21 % sunflower oil /4% of an interesterified mixture of 70% dry fractionated palm stearin with a slip melting point of 52 degrees Celsius and 30% palm kernel oil /19% of an interesterified mixture of 60% fully hydrogenated palm kernel oil and 40% fully hydrogenated palm oil /11% dry fractionated palm oil olein |
| A | 70 | 62% rapeseed oil /24% dry fractionated palm stearin / 14% of an interesterified mixture of 92% palm oil and 8% palm kernel oil |
| B | 80 | 51.3% sunflower oil /3.2% linseed oil /22.2% dry fractionated palm stearin with a slip melting point of 52 degrees Celsius / 22% dry fractionated palm oil olein / 1.3% fully hydrogenated high erucic rapeseed oil |
| C | 80 | 51.9% sunflower oil /3.5% linseed oil / 22.1% dry fractionated palm stearin with a slip melting point of 52 degrees Celsius / 21.9% dry fractionated palm oil olein /0.6% fully hydrogenated high erucic rapeseed oil |
| D | 80 | 50% rapeseed oil /10% sunflower oil /10% soybean oil / 30% dry fractionated palm stearin with a slip melting point of 52 degrees Celsius |
| E | 80 | 52% rapeseed oil / 5% sunflower oil / 5% soybean oil / 24% of an interesterified mixture of dry fractionated palm stearin with a slip melting point of 52 degrees Celsius /14% of an interesterified mixture of 92% palm oil and 8% palm kernel oil |

| | | |
|---|---|---|
| * calculated on total amount of wrapper margarine ** calculated on total amount of fat blend | | |

The wrapper margarine was prepared by first preparing a mixture with all the ingredients making sure that the ingredients were fully dissolved and the fat blend fully molten. This mixture was processed using conventional votator technology. The product was packed in a wrapper and stored. The votator sequence and settings used are as mentioned in Tables 3 and 4.

**Table 3, votator sequence and settings for Examples 1 to 4**

| | **Unit** | **1** | **2** | **3** | **4** |
|---|---|---|---|---|---|
| Votator sequence | - | ACAABt | ACAABt | AABs | ACAABt |
| Production rate | Kg/h | 3450 | 4200 | 3300 | 150 |
| A1 inlet temperature | °C | 50 | 45 | 45 | 45 |
| C inlet temperature | °C | 33 | 28 | - | 27 |
| B inlet temperature | °C | 12 | 12 | 15 | 10 |
| B exit temperature | °C | 15 | 15 | 16.5 | 12.5 |
| C volume | L | 110 | 110 | - | 3 |
| C speed | Rpm | 200 | 200 | - | 600 |
| B volume | L | 100 | 70 | 100 | 5 |
| B leg volume | L | 30 | 30 | - | 2 |
| Stevens at packing # | Gram | 170 | 150 | nm | 150 |
| Stevens at 5 degrees C * | Gram | 400 | 340 | 330 | 300 |

| | | | | | |
|---|---|---|---|---|---|
| # Stevens measured right after packing without stabilization protocol. * Stevens after packing and storage at 5 degrees Celsius according to protocol (i.e. including stabilization protocol). Bs - Bsingle, Bt - Btwin, Bsv - Bsieve. | | | | | |

**Table 4, votator sequence and settings for Examples A to E**

| | **Unit** | **A** | **B** | **C** | **D** | **E** |
|---|---|---|---|---|---|---|
| Votator sequence | - | AAABsv | ACAABt | ACAABt | ACAABt | ACAABt |
| Production rate | Kg/h | 1950 | 2400 | 4800 | 3300 | 2100 |
| A1 inlet temperature | roc | 45 | 45 | 45 | 47 | 50 |
| C inlet temperature | °C | - | 28.5 | 29 | 29 | 28 |
| B inlet temperature | °C | 13 | 10.5 | 12 | 13 | 15 |
| B exit temperature | °C | 14.5 | 14 | 14 | 15 | 17 |
| C volume | L | - | 106 | 83 | 110 | 110 |
| C speed | Rpm | - | 287 | 248 | 200 | 200 |
| B volume | L | 62 | 60 | 120 | 70 | 70 |
| B leg volume | L | - | 20 | 40 | 25 | 25 |
| Stevens at packing # | Gram | 106 | too soft | too soft | too soft | too soft |
| Stevens at 5 degrees C * | Gram | 198 | - | - | - | - |

| | | | | | | |
|---|---|---|---|---|---|---|
| # Stevens measured right after packing without stabilization protocol. * Stevens after packing and storage at 5 degrees Celsius according to protocol (i.e. including stabilization protocol). Bs - Bsingle, Bt - Btwin, Bsv - Bsieve. | | | | | | |

### Results

For examples 1 to 4 the Stevens value at time of packing allowed for packing of the wrapper margarine and the products passed the stacking test as described above. The examples A to E all showed defects. Example A was relatively soft at packing and still too soft after storage (and post hardening). Examples B to D showed channeling and were too soft to pack. Example E was very soft at packing but was packed at low speed to compensate. However, example E failed the stacking test. The TAG characteristics of the examples are given in Table 5

**Table 5, TAG characteristics**

| Example | H3/H2M * | H2U/H2M * | HT/LT * | H3/LT * | H3+H2M+H2U (wt%) |
|---|---|---|---|---|---|
| 1 | 1.7 | 2.9 | 0.23 | 0.14 | 23.8 |
| 2 | 1.9 | 3.3 | 0.21 | 0.14 | 21.7 |
| 3 | 4.2 | 5.9 | 0.22 | 0.18 | 24.4 |
| 4 | 0.5 | 1.0 | 0.2 | 0.06 | 17.1 |
| A | 10.2 | 12.7 | 0.23 | 0.21 | 25.2 |
| B | 26.4 | 51.5 | 0.27 | 0.26 | 29.8 |
| C | 24.6 | 51.6 | 0.24 | 0.23 | 29.0 |
| D | 22.7 | 23.8 | 0.22 | 0.22 | 24.2 |
| E | 9.2 | 14.6 | 0.21 | 0.19 | 26.0 |

| | | | | | |
|---|---|---|---|---|---|
| * Weight ratio | | | | | |

## Claims

1. Edible fat blend comprising liquid oil and structuring fat, the fat blend comprising a mixture of triglycerides wherein the weight ratio of the
- H3/H2M triglycerides is 1.35 to 4.3,
- H2U/H2M triglycerides is 1.8 to 6,
- HT/LT triglycerides is 0.17 to 0.25,
- H3/LT triglycerides is 0.11 to 0.20,
and wherein tha fat blend comprises 15 to 35 wt% saturated fatty acids (SAFA), wherein H represents the saturated longer chain fatty acids of C16 and higher wherein M represents the saturated middle melting fatty acid chains of C12 to C14; wherein U represents an unsaturated fatty acid chain;
wherein H3, H2M and H2U are defined as HT; and
wherein U3 are defined as LT; and
wherein the definition X2Yincludes all configurations.

2. Fat blend according to claim 1 wherein the fat blend comprises 20 to 35 wt%. preferably 25 to 35 wt% and more preferably 25 to 30 wt% SAFA.

3. Fat blend according to claim 1 or claim 2 wherein the fat blend comprises 10 to 40 wt%, preferably 15 to 35 wt% and more preferably 20 to 30 wt% essential fatty acids (EFA).

4. Fat blend according to any one of claims 1 to 3 wherein the fat blend comprises less than 5 wt%, preferably less than 3 wt% and more preferably less than 1 wt% trans unsaturated fatty acid.

5. Fat blend according to any one of claims 1 to 4 wherein the fat blend comprises a combined amount of H3 + H2M + H2U of 10 to 25 wt% and preferably 15 to 20 wt% wherein H represents the saturated longer chain fatty acids of C16 and higher; wherein M represents the saturated middle melting fatty acid chains of C12 to C14; wherein U represents an unsaturated fatty acid chain; and wherein the definition X2Y includes all configurations.

6. Fat blend according to any one of claims 1 to 5 wherein the fat blend comprises 50 to 80 wt% and preferably 60 to 70 wt% liquid oil.

7. Edible fat continuous wrapper margarine comprising 5 to 60 wt% of a dispersed aqueous phase and 40 to 95 wt% of a fat phase, wherein the fat phase is a fat blend according to any one of claims 1 to 8, and wherein the wrapper margarine has a Stevens value at 5 degrees Celsius of 275 to 600 gram.

8. Wrapper margarine according to claim 7 wherein the wrapper margarine comprises 50 to 90 wt%, preferably 80 to 90 wt% and more preferably 65 to 85 wt% of the fat phase.

9. Wrapper margarine according to claim 7 or claim 8 wherein the wrapper margarine has a Stevens value at 5 degrees Celsius of 300 to 500 gram and preferably of 350 to 400 gram.

10. Wrapper margarine according to claim 7 or claim 8 wherein the wrapper margarine has a Stevens value at 10 degrees Celsius of 200 to 350 gram, preferably of 250 to 300 gram.

11. Wrapper margarine according to any one or claims 7 to 10 wherein the wrapper margarine comprises 10 to 50 wt%, preferably 10 to 40 wt% and more preferably 15 to 35 wt% of the dispersed aqueous phase.

12. Wrapper margarine according to any one of claims 7 to 11 wherein the dispersed aqueous phase has a droplet size of less than 15 micrometer, preferably less than 10 micrometer and more preferably less than 5 micrometer.

13. Process for the preparation of a wrapper margarine according to any one of claims 7 to 11 comprising the steps of providing a fat blend according to any one of claims 1 to 6, providing a mixture comprising said fat blend and an aqueous phase, and processing the mixture in a votator comprising at least one B-unit to provide a fat continuous emulsion.

14. Process according to claim 13 wherein the votator comprises a B-unit as the last processing unit before packing of the fat continuous emulsion.

## Patentansprüche

1. Speisefettgemisch, das flüssiges Öl und strukturbildendes Fett aufweist, wobei das Fettgemisch ein Gemisch von Triglyceriden aufweist, wobei das Gewichtsverhältnis von
- H3/H2M-Triglyceriden 1,35 bis 4,3 beträgt,
- H2U/H2M-Triglyceriden 1,8 bis 6 beträgt,
- HT/LT-Triglyceriden 0,17 bis 0,25 beträgt,
- H3/LT-Trilgyceriden 0,11 bis 0,20 beträgt,
und wobei das Fettgemisch 15 bis 35 Gew.-% gesättigte Fettsäuren (SAFA) aufweist,
wobei H für gesättigte längerkettige Fettsäuren mit C16 und mehr steht, wobei M für gesättigten Fettsäureketten mit mittlerem Schmelzpunkt mit C12 bis C 14 steht;
wobei U für eine ungesättigte Fettsäurekette steht;
wobei H3, H2M und H2U als HT definiert werden; und
wobei U3 als LT definiert wird; und
wobei die Definitionen X2Y alle Konfigurationen einschließt.

2. Fettgemisch nach Anspruch 1,
wobei das Fettgemisch 20 bis 35 Gew.-%, vorzugsweise 25 bis 35 Gew.-% und stärker bevorzugt 25 bis 30 Gew.-% SAFA aufweist.

3. Fettgemisch nach Anspruch 1 oder 2,
wobei das Fettgemisch 10 bis 40 Gew.-%, vorzugsweise 15 bis 35 Gew.-% und stärker bevorzugt 20 bis 30 Gew.-% essentielle Fettsäuren (EFA) aufweist.

4. Fettgemisch nach einem der Ansprüche 1 bis 3,
wobei das Fettgemisch weniger als 5 Gew.-%, vorzugsweise weniger als 3 Gew.-% und stärker bevorzugt weniger als 1 Gew.-% Trans-Fettsäure aufweist.

5. Fettgemisch nach einem der Ansprüche 1 bis 4,
wobei das Fettgemisch eine Summe der Mengen von H3 + H2M + H2U von 10 bis 25 Gew.-% und vorzugsweise von 15 bis 20 Gew.-% aufweist,
wobei H für gesättigte längerkettige Fettsäuren mit C16 und mehr steht, wobei M für gesättigten Fettsäureketten mit mittlerem Schmelzpunkt mit C12 bis C14 steht;
wobei U für eine ungesättigte Fettsäurekette steht; und
wobei die Definitionen X2Y alle Konfigurationen einschließt.

6. Fettgemisch nach einem der Ansprüche 1 bis 5,
wobei das Fettgemisch 50 bis 80 Gew.-% und vorzugsweise 50 bis 70 Gew.-% flüssiges Öl aufweist.

7. Abgepackter Margarinewürfel mit Speisefett als kontinuierlicher Phase, der 5 bis 60 Gew. % einer dispersen wässrigen Phase und 40 bis 95 Gew. % einer Fettphase aufweist, wobei die Fettphase ein Fettgemisch nach einem der Ansprüche 1 bis 6 ist und wobei der abgepackte Margarinewürfel einen Stevens-Wert bei 5 °C von 275 bis 600 g aufweist.

8. Abgepackter Margarinewürfel nach Anspruch 7,
wobei der abgepackte Margarinewürfel 50 bis 90 Gew.-%, vorzugsweise 60 bis 90 Gew.-% und stärker bevorzugt 65 bis 85 Gew.-% der Fettphase aufweist.

9. Abgepackter Margarinewürfel nach Anspruch7 oder 8,
wobei der abgepackte Margarinewürfel ein Stevens-Wert bei 5 °C von 300 bis 500 g und vorzugsweise von 350 bis 400 g aufweist.

10. Abgepackter Margarinewürfel nach Anspruch7 oder 8,
wobei der abgepackte Margarinewürfel ein Stevens-Wert bei 10 °C von 200 bis 350 g und vorzugsweise von 250 bis 300 g aufweist.

11. Abgepackter Margarinewürfel nach einem der Ansprüche 7 bis 10,
wobei der abgepackte Margarinewürfel 10 bis 50 Gew.-%, vorzugsweise 10 bis 40 Gew.-% und stärker bevorzugt 15 bis 35 Gew.-% der dispersen wässrigen Phase aufweist.

12. Abgepackter Margarinewürfel nach einem der Ansprüche 7 bis 11,
wobei die disperse wässrige Phase eine Tröpfchengröße von weniger als 15 µm, vorzugsweise weniger als 10 µm und stärker bevorzugt weniger als 5 µm aufweist.

13. Verfahren zum Herstellen eines abgepackten Margarinewürfels nach einem der Ansprüche 7 bis 11,
das die Schritte des Bereitstellens eines Fettgemischs nach einem der Ansprüche 1 bis 6, des Bereitstellens eines Gemischs, das das Fettgemisch und eine wässrige Phase aufweist, und des Verarbeitens des Gemischs in einem Votator aufweist, der zumindest eine B-Einheit aufweist, um eine Emulsion mit kontinuierlicher Fettphase bereitzustellen.

14. Verfahren nach Anspruch 13,
wobei der Votator eine B-Einheit als letzte Verarbeitungseinheit vor dem Verpacken der Emulsion mit kontinuierlicher Fettphase aufweist.

## Revendications

1. Combinaison de graisse comestible comprenant une huile liquide et une graisse structurante, la combinaison de graisse comprenant un mélange de triglycérides dans laquelle le rapport massique
- triglycérides H3/H2M est de 1,35 à 4,3,
- triglycérides H2U/H2M est de 1,8 à 6,
- triglycérides HT/LT est de 0,17 à 0,25,
- triglycérides H3/LT est de 0,11 à 0,20,
et dans laquelle la combinaison de graisse comprend de 15 à 35 % en poids d'acides gras saturés (SAFA),
dans laquelle H représente les acides gras à chaîne longue saturés en C16 et plus,
dans laquelle M représente les chaînes d'acides gras de fusion moyenne saturés en C12 à C14 ;
dans laquelle U représente une chaîne d'acide gras insaturé ;
dans laquelle H3, H2M et H2U sont définis comme HT ; et
dans laquelle U3 est défini comme LT ; et
dans laquelle la définition X2Y comprend toutes les configurations.

2. Combinaison de graisse selon la revendication 1, dans laquelle la combinaison de graisse comprend de 20 à 35 % en poids, de préférence de 25 à 35 % en poids et encore mieux de 25 à 30 % en poids de SAFA.

3. Combinaison de graisse selon la revendication 1 ou la revendication 2, dans laquelle la combinaison de graisse comprend de 10 à 40 % en poids, de préférence de 15 à 35 % en poids et encore mieux de 20 à 30 % en poids d'acides gras essentiels (EFA).

4. Combinaison de graisse selon l'une quelconque des revendications 1 à 3, dans laquelle la combinaison de graisse comprend moins de 5 % en poids, de préférence moins de 3 % en poids et encore mieux moins de 1 % en poids d'acides gras trans insaturés.

5. Combinaison de graisse selon l'une quelconque des revendications 1 à 4, dans laquelle la combinaison de graisse comprend une quantité combinée de H3 + H2M + H2U de 10 à 25 % en poids et de préférence de 15 à 20 % en poids ; dans laquelle H représente les acides gras à chaîne longue saturés en C16 et plus ; dans laquelle M représente les chaînes d'acides gras de fusion moyenne saturés en C12 à C14 ; dans laquelle U représente une chaîne d'acide gras insaturé ; et dans laquelle la définition X2Y comprend toutes les configurations.

6. Combinaison de graisse selon l'une quelconque des revendications 1 à 5, dans laquelle la combinaison de graisse comprend de 50 à 80 % en poids et de préférence de 60 à 70 % en poids d'huile liquide.

7. Margarine d'emballage continue de graisse comestible comprenant de 5 à 60 % en poids d'une phase aqueuse dispersée et de 40 à 95 % en poids d'une phase de graisse, dans laquelle la phase de graisse est une combinaison de graisse selon l'une quelconque des revendications 1 à 6, et dans laquelle la margarine d'emballage présente une valeur Stevens à 5 degrés Celsius de 275 à 600 grammes.

8. Margarine d'emballage selon la revendication 7, dans laquelle la margarine d'emballage comprend de 50 à 90 % en poids, de préférence de 60 à 90 % en poids et encore mieux de 65 à 85 % en poids de la phase de graisse.

9. Margarine d'emballage selon la revendication 7 ou la revendication 8, dans laquelle la margarine d'emballage présente une valeur Stevens à 5 degrés Celsius de 300 à 500 grammes et de préférence de 350 à 400 grammes.

10. Margarine d'emballage selon la revendication 7 ou la revendication 8, dans laquelle la margarine d'emballage présente une valeur Stevens à 10 degrés Celsius de 200 à 350 grammes, de préférence de 250 à 300 grammes.

11. Margarine d'emballage selon l'une quelconque des revendications 7 à 10, dans laquelle la margarine d'emballage comprend de 10 à 50 % en poids, de préférence de 10 à 40 % en poids et encore mieux de 15 à 35 % en poids de la phase aqueuse dispersée.

12. Margarine d'emballage selon l'une quelconque des revendications 7 à 11, dans laquelle la phase aqueuse dispersée présente une taille de gouttelette inférieure à 15 micromètres, de préférence inférieure à 10 micromètres et encore mieux inférieure à 5 micromètres.

13. Procédé pour la préparation d'une margarine d'emballage selon l'une quelconque des revendications 7 à 11 comprenant les étapes consistant à fournir une combinaison de graisse selon l'une quelconque des revendications 1 à 6, à fournir un mélange comprenant ladite combinaison de graisse et une phase aqueuse, et à traiter le mélange dans un évaporateur rotatif comprenant au moins une unité B pour fournir une émulsion continue de graisse.

14. Procédé selon la revendication 13, dans lequel l'évaporateur rotatif comprend une unité B comme la dernière unité de traitement avant l'emballage de l'émulsion continue de graisse.
